# EUROPÄISCHE PATENTANMELDUNG

(11) **EP 4 542 423 A1**
(43) Veröffentlichungstag der Anmeldung: **23.04.2025**
(21) Anmeldenummer: 23204624.3
(22) Anmeldetag: 19.10.2023
(51) Int. Cl.: G06F 21/14, G06F 21/56

(54) **VERFAHREN ZUR OBFUSKATION VON LLM-GENERIERTEM CODE**

(71) Anmelder: Robert Bosch GmbH, 70442 Stuttgart (DE)
(72) Erfinder: Schlund, Maximilian, 71034 Boeblingen (DE); Quante, Jochen, 71640 Ludwigsburg (DE); Woehrle, Matthias, 74321 Bietigheim-Bissingen (DE); Huth, Christopher, 74076 Heilbronn (DE); Hecking-Harbusch, Jesko, 71229 Leonberg (DE); Sierra Loaiza, Sebastian Ernesto, 04107 Leipzig (DE)

(57) **Zusammenfassung**

Ein Verfahren (10) zur Obfuskation von Programmcode (23) mittels eines Sprachmodells (22) umfasst die Schritte:
- Obfuskieren (11) eines Programmcodes (23) mittels eines Sprachmodells (22),
- Erzeugen (12) einer ausführbaren Datei (43) aus dem obfuskierten Programmcode (23),
- dynamisches De-Obfuskieren (13) der ausführbaren Datei (43) bis das De-Obfuskieren (13) abgeschlossen ist oder zu keinen neuen Ergebnissen führt,
- Speichern (14) von Metriken des dynamischen De-Obfuskierens (13),
- Rückführen (15) von Metriken des dynamischen De-Obfuskierens (13) und optional des generierten Programmcodes (23) an das Sprachmodell (22) für eine weitere Iteration des Obfuskierens (11).

## Beschreibung

### Stand der Technik

Zunehmend wird Programmcode mit Sprachmodellen wie Large Language Models (LLMs) erzeugt. Dies kann zum Beispiel im Rahmen einer Sprachübersetzung beziehungsweise automatisierten Programmcode Übersetzung oder einer Code Refaktorierung geschehen.

Die Verwendung von Ansätzen zur automatisierten Codegenerierung zum Beispiel aus LLMs bringt immer Herausforderungen mit sich, so gibt es keine Garantie für die Korrektheit des Codes und keine Garantie für Leistu ngsverbesseru ngen.

Unter Obfuskierung, Obfuskation oder Codeverschleierung versteht man die Veränderung des Codes sowie der kompilierten ausführbaren Datei in einer Weise, dass Menschen das Programm kaum noch verstehen können, während es funktionell korrekt bleibt. Die Vorteile der Codeverschleierung liegen in der erhöhten Manipulationssicherheit und der Verhinderung von Reverse Engineering, z. B. zum Schutz von geistigem Eigentum von Algorithmen. Das Vornehmen einer Obfuskation vor allem bei der Arbeit mit größeren Codebasen kann schnell aufwendig werden.

### Offenbarung der Erfindung

Ein erster allgemeiner Aspekt der vorliegenden Offenbarung betrifft ein Verfahren zur Obfuskation von Programmcode mittels eines Sprachmodells.

Das Verfahren umfasst
- Obfuskieren eines Programmcodes mittels eines Sprachmodells,
- Erzeugen einer ausführbaren Datei aus dem obfuskierten Programmcode,
- dynamisches De-Obfuskieren der ausführbaren Datei bis das De-Obfuskieren abgeschlossen ist oder zu keinen neuen Ergebnissen führt,
- Speichern von Metriken des dynamischen De-Obfuskierens,
- Rückführen von Metriken des dynamischen De-Obfuskierens und optional des generierten Programmcodes an das Sprachmodell für eine weitere Iteration des Obfuskierens.

Ein zweiter allgemeiner Aspekt der vorliegenden Offenbarung betrifft ein Verfahren zum Trainieren eines Sprachmodells eingerichtet zur Obfuskation von Programmcode.

Das Verfahren umfasst
- Erzeugen eines Programmcodes,
- Obfuskieren des Programmcodes mit dem Verfahren gemäß dem ersten allgemeinen Aspekt der vorliegenden Offenbarung,
- Erzeugen einer Belohnung für das Sprachmodell, wobei die Belohnung anhand der gespeicherten Metriken des dynamischen De-Obfuskierens und/oder der gespeicherten Metriken der Codekomplexität erzeugt wird,
- Aktualisieren von Gewichten des Sprachmodells mit dem Wert der Belohnung.

Ein dritter allgemeiner Aspekt der vorliegenden Offenbarung betrifft ein Computersystem, das dafür ausgelegt ist, das Verfahren gemäß dem ersten und/oder dem zweiten allgemeinen Aspekt (oder einer Ausführungsform davon) auszuführen.

Ein vierter allgemeiner Aspekt der vorliegenden Offenbarung betrifft ein Computerprogramm, das dafür ausgelegt ist, das Verfahren gemäß dem ersten allgemeinen Aspekt (oder einer Ausführungsform davon) auszuführen.

Ein fünfter allgemeiner Aspekt der vorliegenden Offenbarung betrifft ein computerlesbares Medium oder Signal, das das Computerprogramm gemäß dem vierten allgemeinen Aspekt (oder einer Ausführungsführungsform davon) speichert und/oder enthält.

Die Techniken des ersten, zweiten, dritten, vierten und fünften allgemeinen Aspekts können in manchen Situationen einen oder mehrere der folgenden Vorteile haben.

Die vorliegende Offenbarung verwendet Methoden der Künstlichen Intelligenz, wie LLMs, um obfuskierten oder verschleierten Code zu erzeugen. Dieser verschleierte Code wird dann überprüft, dynamisch entschleiert und statisch auf seine Komplexität analysiert. Die Rückmeldungen aus diesen Analysen werden dann wieder in die Codegenerierung eingespeist.

Die vorliegende Offenbarung ermöglicht einen mittels LLM obfuskierten Code effektiv zu testen, so dass der LLM besseren verschleierten Code generieren kann. Dazu können Verifikations- und Validierungs- (V&V) Techniken um den Code verwendet werden, um Resultate des Sprachmodells abzusichern, das heißt seine Korrektheit zu verifizieren und zu validieren. Diese starke oder vollständige Automatisierung erhöht die Effizienz. Die V&V Techniken werden eingesetzt, um sicher zu stellen, dass das Ergebnis (wahrscheinlich) korrekt ist, dem Nutzer über die Korrektheit, Konfidenz und/oder Qualität der Übersetzung Feedback zu geben und die Code Obfuskation zuverlässiger zu machen. Außerdem wird die Fitness des generierten Codes in Form von Verschleierungsmetriken dynamisch und statisch gemessen. Je verschleierter der Code ist, d. h. je schwieriger oder zeitaufwendiger er sich zurückentwickeln lässt, desto größer ist die Obfuskationsmetrik des Codes.

Normalerweise verschlechtert die Arbeit mit größeren Codebasen im Allgemeinen die Verwendbarkeit statischer Methoden, z. B. der abstrakten Interpretation, da Korrektheitsgarantien nicht in einem vertretbaren Zeitrahmen berechnet werden können oder eine Approximation erforderlich ist, die dann Überapproximationsfehler einführen kann. Außerdem sind statische Methoden kaum für die Messung der Software-Performance, z. B. der Laufzeit, geeignet. Die vorliegende Offenbarung hingegen ermöglicht dynamische Methoden, das heißt zur Laufzeit des Codes.

Die vorliegende Offenbarung ermöglicht die Obfuskation von Programmcode mit nicht-deterministische Eigenschaften, da ein eines Sprachmodell wie ein LLM verwendet wird. Der Stand der Technik stützt sich in der Regel auf eine Grammatik, um verschleiernde Anweisungen einzufügen. Für jedes vorgeschlagene Werkzeug kann theoretisch ein spezielles Reverse-Engineering-Werkzeug entwickelt werden, das die verwendete Grammatik umkehrt. Die Verwendung eines LLM bietet nicht-deterministische Eigenschaften, was das Reverse Engineering erschwert.

Die vorliegende Offenbarung verwendet ein Sprachmodell wie ein LLM, um verschleierten Code zu erzeugen. Es ist ein Obfuskations-Feedback vorgesehen, um eine bessere Eingabe (Prompt) an das Sprachmodell zu erzeugen, was zur Erzeugung von besser obfuskierten Code führt.

Code Obfuscation ist eine Härtung gegen Reverse Engineering. Die vorliegende Offenbarung ermöglicht zusätzlich das Nachvollziehen von unerlaubten Kopien. Code Obfuskation fügt im Grunde einen "Fingerabdruck" in der Software ein, der wie ein Sicherheitsmerkmal wirkt. Damit können zum Beispiel nachvollzogen werden wie z.B. extrahierte Firmware weiterverteilt wurde.

Die vorliegende Offenbarung ist relevant für jedes Produkt, das auf automatisierten Tests basiert, insbesondere für dynamische Testmethoden, und jedes Produkt, das Legacy-Code oder Leistungsprobleme aufweist.

Einige Begriffe werden in der vorliegenden Offenbarung in folgender Weise verwendet.

Ein "Sprachmodell" kann insbesondere ein Large Language Model (LLM), neuronales Netz, Recurrent Neural Network (RNN), ein Transformer Model oder ein Codemodell als ein auf Code spezialisiertes Sprachmodell oder auch ein ganz allgemeines Sprachmodell, das auch Code umfasst, sein. Weiterhin umfasst sind Computersprachen, Codes wie Programmcodes einer Recheneinrichtung wie einem Computer. Die Sprache des Modells kann nicht nur natürliche Sprachen, sondern auch künstliche Sprachen wie zum Beispiel Programmiersprachen beinhalten.

"Refaktorierung" von Code (englisch: refactoring) bezeichnet in der SoftwareEntwicklung Strukturverbesserungen von Code unter Beibehaltung des beobachtbaren Programmverhaltens, d.h. der Funktionalität. Dabei sollen primär die Performanz verbessert werden, also Laufzeit und/oder Speicherbedarf. Des weiteren kann zum Beispiel Lesbarkeit, Verständlichkeit, Wartbarkeit und/oder Erweiterbarkeit verbessert werden, mit dem Ziel, den jeweiligen Aufwand für Fehleranalyse und/oder funktionale Erweiterungen zu senken. Typische Refaktorierungen sind z.B. Umbenennung von Variablen in selbsterklärende Namen und/oder die Extraktion von Codeteilen in eigene Methoden. Durch das Refaktorieren wird die Qualität des Codes, mithin der Software erhöht.

Das "Testen", "Prüfen" oder "Vergleichen des Ursprung-Programmcodes und des Ziel-Programmcodes" kann umfassen: eine formale Prüfung des gleichen Verhaltens des Ursprung-Programmcodes und des Ziel-Programmcodes zum Beispiel mittels Bounded Model Checking, Tests in der Ursprungssprache, Test auf Contracts in der Ursprungssprache und/oder syntaktischen und stilistischen Tests, Fuzzing, Mutation der Eingänge des Test-Harness, Ableitung aus Contracts der Ursprungssprache und/oder der Zielsprache und/oder Ableitung aus einem Sprachmodell.

Ein "Test-Harness" bzw. Testrahmen umfasst eine Sammlung von Software und Testdaten, die zum systematischen automatisierten Testen eines Programms unter verschiedenen Umgebungsbedingungen verwendet wird. Ein Test-Harness umfasst üblicherweise eine Testausführungs-Engine, welche für die Abarbeitung der Testlogik verantwortlich ist, und ein Testdaten-Repository oder Datenbank, welches die Testskripte, Testprogramme und sonstige Testressourcen beinhaltet. Hier wird der Test-Harness automatisiert erzeugt, indem zum Beispiel differenzierende Tests zu der Datenbank hinzugefügt werden. Der Start des Tests kann mit gegebenen oder vorgefertigten Tests aus der Test-Datenbank gestartet werden. Das System kann zudem Tests automatisch generieren.

Daten können hier Software Code inklusive Test cases und harnesses plus zusätzlichen (natürlich-sprachlichen) Beschreibungen von der Funktionsweise bzw. Gültigkeitsbereichen sein. Im Fall der Sprachübersetzung wird hier beispielhaft C als Source Sprache und Rust als Target Sprache beschrieben, es sind aber auch andere Kombinationen möglich. Die Übersetzung von C in Rust ist interessant, da Rust Features im Bereich sicherheitskritischer Systeme bietet, aber viel Legacy Code in anderen Sprachen, vor allem C vorhanden ist. Im Fall der Refaktorisierung sind Quell- und Zielsprache gleich.

"Contracts" sind Bestandteil einer vertragsbasierten Programmierung oder eines Entwurfs gemäß Vertrag ("Design by contract"). Dies ist ein Konzept der Softwareentwicklung mit dem Ziel eines optimierten Zusammenspiels einzelner Programmmodule durch die Definition formaler Verträge zur Verwendung von Schnittstellen, die über deren statische Definition hinausgehen.

Der Begriff "Codebasis" (englisch codebase) bezeichnet die Gesamtheit der zu einem Projekt gehörenden Quelltextdateien sowie eventuell dazugehöriger Konfigurationsdateien. Die Codebasis kann auch diverse andere Dateien, welche für den Vorgang des Kompilierens benötigt werden, z. B. sogenannte Makefiles, umfassen.

Ein "Testfall" ist eine bestimmte Eingabe und ein bestimmter Testdurchlauf aus einem Test Harness oder einem Fuzz Test. Um die Reproduzierbarkeit zu gewährleisten, werden interessante Durchläufe (Finden neuer Codepfade oder Abstürze) gespeichert.

Eine "Instrumentierung" wird verwendet, um die Abdeckungsmetrik beobachtbar zu machen, z. B. während der Kompilierung. Instrumentierung ist das Einfügen von Anweisungen in ein Programm, um eine Rückmeldung über die Ausführung zu erhalten. Sie wird meist durch den Compiler realisiert und kann z.B. die erreichten Codeblöcke während der Ausführung beschreiben.

Unter "Obfuskierung", "Obfuskation" oder "Codeverschleierung" versteht man die Veränderung des Codes sowie der kompilierten ausführbaren Datei in einer Weise, dass Menschen das Programm kaum noch verstehen können, während es funktionell korrekt bleibt. Die Vorteile der Codeverschleierung liegen in der erhöhten Manipulationssicherheit und der Verhinderung von Reverse Engineering, z. B. zum Schutz von geistigem Eigentum von Algorithmen.

Unter "De-Obfuskation" versteht man das Bemühen, einen obfuskierten Code beziehungsweise eine obfuskierte Datei besser lesbar und verständlich zu machen. De-Obfuskation ist ein Tool des Reverse Engineerings.

Kurzbeschreibung der Figuren
**Fig. 1** ist ein Flussdiagramm, das die Techniken der vorliegenden Offenbarung zur Obfuskation von Programmcode illustriert.
**Fig. 2** zeigt schematisch ein System, in dem die Techniken der vorliegenden Offenbarung zur Obfuskation von Programmcode eingesetzt werden können.
**Fig. 3** zeigt schematisch ein System mit einem dynamischen De-Obfuskator und einer statischen Komplexitätsprüfung, in dem die Techniken der vorliegenden Offenbarung zur Obfuskation von Programmcode eingesetzt werden können.
**Fig. 4** zeigt schematisch ein System, in dem die Techniken der vorliegenden Offenbarung zur Obfuskation von Programmcode eingesetzt werden können.
**Fig. 5** ist ein Flussdiagramm, das die Techniken der vorliegenden Offenbarung zum Trainieren eines Sprachmodells illustriert.

### Detaillierte Beschreibung

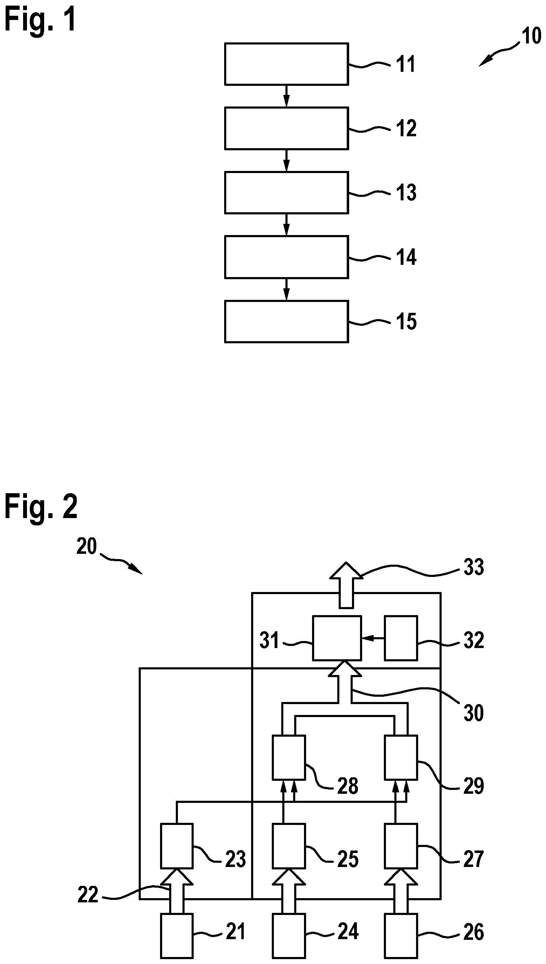

Fig. 1 ist ein Flussdiagramm, das ein Verfahren 10 zur Obfuskation von Programmcode mittels eines Sprachmodells. Der Programmcode kann manuell oder ebenfalls mittels eines Sprachmodells generiert werden. Zum Beispiel wird der Code in einer automatisierten Programmcode Übersetzung von einer Ursprungssprache in eine Zielsprache erzeugt. Alternativ kann der Programmcode per Code Refaktorierung erzeugt werden.

Das in dieser Offenbarung vorgeschlagene Verfahren 10 ist zur Obfuskation von Programmcode mittels eines Sprachmodells gerichtet. Die Software kann dafür ausgelegt sein, ein technisches System, insbesondere ein cyber-physisches System, insbesondere mindestens eine Recheneinheit eines Fahrzeugs, zu steuern, zu regeln und/oder zu überwachen. Insbesondere kann die Software eine eingebettete Software sein, die dafür ausgelegt ist, auf einem eingebetteten (d.h. z.B. aufgabenspezifischen) System ausgeführt werden.

In einem ersten Schritt erfolgt ein Obfuskieren 11 eines Programmcodes mittels eines Sprachmodells. Dazu wird der Programmcode mit einem entsprechenden Befehl in einen Prompt des Sprachmodells eingegeben, so dass das Sprachmodell das Obfuskieren ausführt. Variierende Befehle oder Eingaben können eine Varianz im Output des Sprachmodells erzeugen, welche für eine iterative Verbesserung des Sprachmodells genutzt werden können.

Es erfolgt ein Erzeugen 12 einer ausführbaren Datei aus dem obfuskierten Programmcode.

Es schließt sich ein dynamisches De-Obfuskieren 13 der ausführbaren Datei an. Dies wird beendet, wenn das De-Obfuskieren 13 abgeschlossen ist oder zu keinen neuen Ergebnissen führt. Keine neuen Ergebnisse sind zum Beispiel zu erwarten, wenn die Entschleierungsmetrik oder die Metriken des dynamischen De-Obfuskierens Endlosschleifen oder Hänger anzeigt, das heißt, wenn der Entschleierungsprozess stecken bleibt, was zu einer hohen Entschleierungsmetrik führt. Die dynamische Entschleierung kann Spuren überwachen, die Programmausgaben sammeln und das Programmverhalten, z. B. die Laufzeit, messen. Der Deobfuskator versucht, die ausführbare Datei zu entschleiern, z. B. durch Zugriff auf ein Orakel, so dass das Ergebnis der Entschleierung immer noch funktional korrekt zur verschleierten ausführbaren Datei ist.

Ein Speichern 14 von Metriken des dynamischen De-Obfuskierens 13 schließt sich an. Beide Prozesse, das heißt das dynamische De-Obfuskieren und das Speichern können dynamisch parallel oder zeitlich verschachtelt erfolgen. Die Metriken des dynamischen De-Obfuskierens 12 können eine De-Obfuskationslaufzeit, Code-Spuren, Programmausgaben und/oder das Programmverhalten wie zum Beispiel die Laufzeit umfassen. Diese Metriken werden gespeichert, um einen Vergleich für spätere Verbesserungen der Verschleierung zu haben.

Es erfolgt ein Durchführen 15 einer statischen Komplexitätsprüfung des Programmcodes bis das Durchführen 15 abgeschlossen ist oder zu keinen neuen Ergebnissen führt. Keine neuen Ergebnisse sind zum Beispiel zu erwarten, wenn die Messung Endlosschleifen oder Hänger anzeigt, das heißt wenn die Messung stecken bleibt, was zu hohen Metriken der Codekomplexität führt.

Ein Speichern 16 von Metriken der Codekomplexität schließt sich optional an. Beide Prozesse, das heißt die statische Komplexitätsprüfung und das Speichern können dynamisch parallel oder zeitlich verschachtelt erfolgen. Die Metriken der Codekomplexität können Bestandteile wie zyklomatische Komplexität, Anzahl der Zeilen des Quellcodes, Anzahl der Zeilen des ausführbaren Codes, Kopplung und/oder Tiefe der Vererbung, Wartbarkeitsindex, kognitive Komplexität, Halstead Metriken wie zum Beispiel dem Halstead Volumen und/oder Nacharbeitsquote umfassen. Diese Metriken werden auch gespeichert, um einen Vergleich für spätere Verbesserungen der Verschleierung zu haben.

Das dynamische De-Obfuskieren 13 der ausführbaren Datei und das Durchführen 15 der statischen Komplexitätsprüfung des Programmcodes können parallel ausgeführt werden. Ebenso können die beiden Speichervorgänge der Metriken parallel ausgeführt werden. Der Begriff parallel umfasst hier auch die Situation, dass die Vorgänge zum gleichen Zeitpunkt gestartet werden, wobei einer der Vorgänge schneller beendet sein kein. Der Begriff parallel umfasst hier ebenso die Situation, dass die Vorgänge nur für einen Teil ihrer Laufzeit parallel ausgeführt werden.

Schließlich erfolgt optional ein Rückführen 17 von Metriken des dynamischen De-Obfuskierens 13 und optional des generierten Programmcodes und/oder der Metriken der Codekomplexität an das Sprachmodell für eine weitere Iteration des Obfuskierens 11. So kann eine bessere Eingabeaufforderung an das Sprachmodell generiert werden. Alle rückgeführten Elemente können vollständig oder teilweise zurückgeführt werden.

Für den Fall, dass der Programmcode von einem Sprachmodell generiert wird, können Metriken des dynamischen De-Obfuskierens 13, der generierte Programmcode und/oder Metriken der Codekomplexität an das Sprachmodell für eine weitere Iteration des Generierens des Sprachmodells an dieses rückgeführt werden. So kann eine bessere Eingabeaufforderung an das Sprachmodell generiert werden. Alle rückgeführten Elemente können vollständig oder teilweise zurückgeführt werden.

Das Generieren des Programmcodes und auch das Obfuskieren können mit einem Sprachmodell ausgeführt werden. Dies können zwei unterschiedliche Sprachmodelle oder ein einziges Sprachmodell sein.

Optional kann der generierte Code zusammen mit seinen Metriken in einer Datenbank gespeichert und später verglichen werden. Aus Effizienzgründen kann lediglich der Code mit der besten Leistung, d. h. mit der höchsten Metrik des dynamischen De-Obfuskierens, gespeichert werden. Ebenso ist es möglich einige der besten Codes mit ihren jeweiligen Metriken zu speichern.

Nach Beendigung des dynamischen Deobfuskierens und der statischen Komplexitätsprüfung oder -berechnung können Verifikations- und Validierungs-(V&V) Techniken auf den Code angewendet werden, um die funktionale Korrektheit sicherzustellen. Die V&V Techniken können auch parallel zum dynamischen Deobfuskator und der statischen Komplexitätsberechnung ausgeführt werden.

Dazu kann der Programmcode anhand von Metriken auf seine Güte bewertet wird, wobei die Metriken zum Beispiel Code-Qualitätsmetriken, Test-Qualitätsmetriken und/oder die Anzahl von Tests umfassen.

Optional kann der LLM-generierte Code auch als Feedback zurück in das Sprachmodell (LLM) zurückgeführt werden, um eine neue Generation von Quellcode zu generieren. Die Idee ist, dass bereits passender (oder besserer) Code dann mit einer aktualisierten Eingabeaufforderung, die den neuen Code enthält, im Hinblick auf die Code-Verschleierung feinabgestimmt werden kann. Wenn zum Beispiel bereits guter Code an bestimmten Stellen nur geringe Verschleierungswerte aufweist, können diese Stellen in den LLM zurückgeführt werden.

Gemäß einer Ausführungsform umfasst das Verfahren weiterhin, dass die gespeicherten Metriken des dynamischen De-Obfuskierens 12 und/oder die gespeicherten Metriken der Codekomplexität unterschiedlich obfuskierter Programmcodes verglichen werden, um den am besten obfuskierten Programmcode zu bestimmen.

Alternativ zu dem beschriebenen Übersetzen kann ein Refaktorieren des Programmcodes vorgesehen sein. Das Refaktorieren des Programmcodes kann Ändern des Programmcodes umfassen oder sein. Der refaktorierte Programmcode kann ebenfalls wieder ein Code der Software, insbesondere ein Quellcode der Software sein.

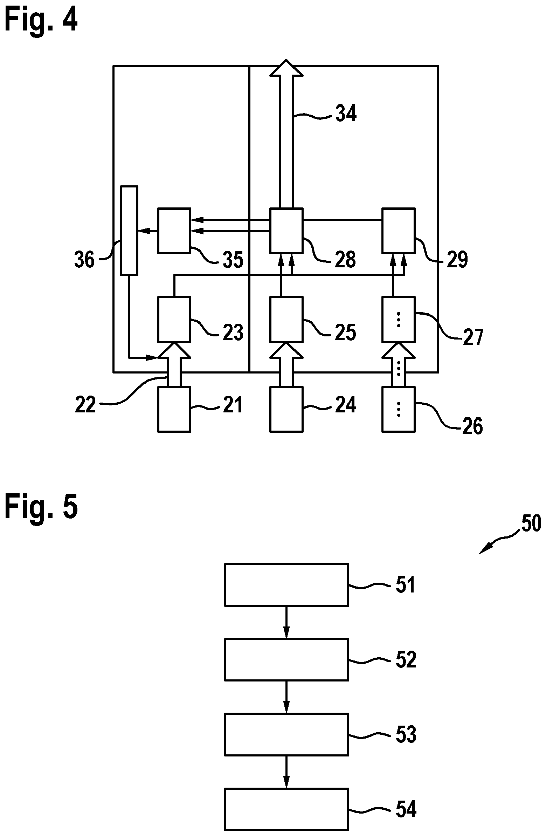

Fig. 2 zeigt schematisch ein Computersystem 20, in dem die Techniken der vorliegenden Offenbarung zur Obfuskation von Programmcode mittels eines Sprachmodells Obfuskation von Programmcode eingesetzt werden können. Das Computersystem 20 ist dafür ausgelegt, das Verfahren 10 gemäß Fig. 1 und das Verfahren 50 gemäß Fig. 5 auszuführen. Das Computersystem 20 kann in Hard- und/oder Software realisiert sein. Entsprechend kann das in Figur 2 gezeigte System als Computerprogramm angesehen werden, das dazu ausgelegt ist, das Verfahren 10 gemäß Fig. 1 und das Verfahren 50 gemäß Fig. 5 auszuführen.

Ein Source Code oder Ursprung-Programmcode 21 wird einem Sprachmodell 22 wie zum Beispiel einem Large Language Model (LLM) zum Obfuskieren zur Verfügung gestellt. Das Sprachmodell 22 erzeugt einen (Ziel) Programmcode 23 als Obfuskation des Ursprung-Programmcodes 21. Dieser Bereich des Computersystems 20 kann als Erzeugungsbereich bezeichnet werden.

Das Sprachmodell ist zum Beispiel ein Large Language Model (LLM) in welches per Eingabe (Prompt) Daten wie hier ein Programmcode zusammen mit einer Fragestellung wie hier einer Obfuskationssanfrage eingegeben werden.

Eine weitere Eingabe 24 in das System 20 sind Tests und optional ein Test-Harness. Diese Eingaben werden einem Test-Harness 25 zugeführt. Der Test-Harness 25 nimmt Funktionen oder Tests in der Zielsprache auf.

Optional können statische Tests, Qualitätsbewertungen und/oder Contracts 26 einer statischen Testeinheit 27 zugeführt werden. Dort werden diese für spätere Überprüfungen des Programmcodes 23 verwaltet.

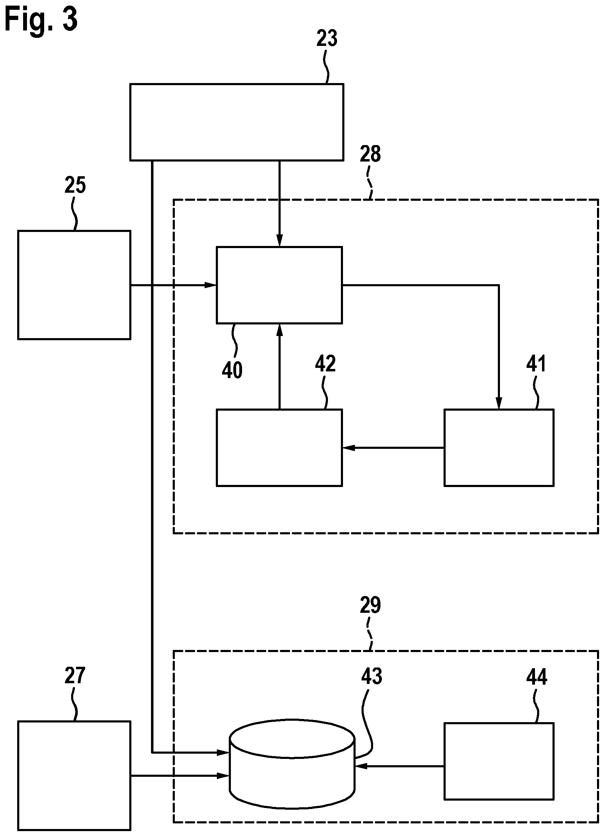

Eingänge eines dynamischen De-Obfuskators 28 für gerichtetes Fuzzing sind mit dem Sprachmodell 22 zur Eingabe des obfuskierten Programmcodes 23 und mit dem Test-Harness 25 zur Eingabe von Testroutinen verbunden. In dem dynamischen De-Obfuskator 28 wird versucht, den obfuskierten Programmcode 23 zu obfuskieren. Dabei werden Codespuren und Ausgaben des obfuskierten Programmcodes 23 überwacht. Der dynamische De-Obfuskator 28 und dessen Funktion sind im Zusammenhang mit Fig. 3 detaillierter beschrieben.

Die Generierung des Programmcodes 23 durch das Sprachmodell 22 kann wiederholt erfolgen mit geänderten Bedingungen, wie Änderung eines oder mehrerer Hyperparameter wie einem Temperatur-Parameter des Sprachmodells, Transformationen im Ursprung-Programmcode und/oder Änderungen in der Eingabe an das Sprachmodell wie zum Beispiel Änderungen in den Aufgaben oder Prompts. Zudem können Variablen im Code umbenannt werden.

Durch diese Maßnahmen wird eine Varianz erzeugt. Diese Varianz erlaubt eine Verifikation sowie eine verbesserte Qualitätsbewertung der erzeugten Obfuskationen und zudem ein Trainieren des Sprachmodells mittels einer Rückkopplung. Im Rahmen der verbesserten Qualitätsbewertung kann festgestellt werden, welche der erzeugten Programmcodes 23 besser oder schlechter geeignet sind. Der dynamische De-Obfuskator 28 arbeitet dann mit diesen Varianten der Programmcodes 23.

Eingänge einer statischen Komplexitätsprüfung 29 sind mit dem Sprachmodell 22 zur Eingabe des obfuskierten Programmcodes 23 und mit der statischen Testeinheit 27 zur Eingabe von statischen Tests, Qualitätsbewertungen und/oder Contracts 26 verbunden. In der statischen Komplexitätsprüfung 29 wird der Programmcode 21 mittels der statischen Tests, Qualitätsbewertungen und/oder Contracts 26 einer statischen Komplexitätsprüfung unterzogen. Die statische Komplexitätsprüfung 29 und dessen Funktion sind im Zusammenhang mit Fig. 3 detaillierter beschrieben.

Wenn die Überprüfungen in dem dynamischen De-Obfuskator 28 und in der statischen Komplexitätsprüfung 29 erfolgreich abgeschlossen sind, wird eine Statusmeldung 30 ausgegeben, dass der Programmcode 23 in Ordnung ist. Dieser Bereich des Computersystems 20 kann als Überprüfungsbereich bezeichnet werden.

Der Ziel-Programmcode 31 kann anhand von Metriken 32 auf seine Güte bewertet werden. Die Metriken 32 können Code-Qualitätsmetriken, Test-Qualitätsmetriken und/oder die Anzahl von Tests umfassen. Bei erfolgreicher Bewertung wird als Ausgabe 33 der Programmcode und seine Qualität oder Güte ausgegeben. Dieser Bereich des Computersystems 20 kann als Qualitätsbewertungsbereich bezeichnet werden.

Basierend auf der Bewertung kann eine Güte berechnet werden. Wenn mehrere Ziel-Programmcodes erzeugt worden sind, können die Lösungen dem Nutzer nach der Güte geordnet bereitgestellt werden.

Die Bewertung des Programmcodes kann zum Beispiel anhand von Code-Qualitätsmetriken wie zum Beispiel der Länge des Quellcodes, der Anzahl der Schleifen und/oder der Verzweigungstiefe, Test-Qualitätsmetriken wie zum Beispiel der Branch coverage und/oder der Anzahl von verfügbaren oder durchgeführten Tests vorgenommen werden.

Fig. 3 zeigt den dynamischen De-Obfuskator 28 und die statische Komplexitätsprüfung 29 im Detail sowie den Test-Harness 25, die statische Testeinheit 27 und den obfuskierten Programmcode 23 als Eingänge für den dynamischen De-Obfuskator 28 und die statische Komplexitätsprüfung 29.

Der dynamische De-Obfuskator 28 umfasst ein kompilierte oder ausführbare Datei 40, welche aus dem Programmcode 23 erzeugt wird. Anders ausgedrückt, erzeugt der dynamische De-Obfuskator 28 oder ein anderes Element des Systems die ausführbare Datei 40 aus dem obfuskierten Programmcode 23. Der dynamische De-Obfuskator 28 kann den generierten Code 23 für die weitere Bearbeitung z. B. instrumentieren. Dazu ist der dynamische De-Obfuskator 28 mit dem Test-Harness 25 verbunden.

Eine Überwachungseinheit 41 misst oder überwacht das dynamische De-Obfuskieren des Codes während der Laufzeit. Die Überwachungseinheit 41 kann Code-Spuren überwachen, die Programmausgaben sammeln und das Programmverhalten, wie z. B. die Laufzeit, messen. Dies kann dann in der Überwachungseinheit 41 gespeichert werden. All dies wird an einen De-Obfuskator 42 zurückgegeben, um bessere De-Obfuskationsversuche zu erzeugen.

Der De-Obfuskator 42 versucht, die ausführbare Datei 40 zu entschleiern, z. B. durch Zugriff auf ein Orakel des De-Obfuskators 42, so dass das Ergebnis der Entschleierung immer noch funktional korrekt zur verschleierten ausführbaren Datei 40 ist. Zusätzlich oder alternativ nutzt der De-Obfuskator 42 das Feedback der Überwachungseinheit 41, um die De-Obfuskation zu verbessern.

Die statische Komplexitätsprüfung 29 umfasst einen Speicher 43 oder ein Repository mit Source Code. Dazu ist der Speicher 43 mit dem obfuskierten Programmcode 23 verbunden. Weiter ist der Speicher 43 mit der statischen Testeinheit 27 verbunden, um statische Tests, Qualitätsbewertungen und/oder Contracts 26 zuzuführen. Diese werden auf den obfuskierten Programmcode 23 angewandt, um die Komplexität des obfuskierten Programmcodes 23 und insbesondere der durch das Sprachmodell vorgenommenen Obfuskation zu erkennen und zu bewerten. Diese Prüfung erzeugt Metriken der Codekomplexität wie zyklomatische Komplexität, Anzahl der Zeilen des Quellcodes, Anzahl der Zeilen des ausführbaren Codes, Kopplung und/oder Tiefe der Vererbung, Wartbarkeitsindex, kognitive Komplexität, Halstead Metriken wie zum Beispiel dem Halstead Volumen und/oder Nacharbeitsquote. Diese Metriken können in der statischen Komplexitätsprüfung 29 gespeichert werden, um einen Vergleich für spätere Verbesserungen der Verschleierung zu haben.

Fig. 4 zeigt schematisch ein Computersystem 20, in dem die Techniken der vorliegenden Offenbarung zur Obfuskation von Programmcode eingesetzt werden können. Das Computersystem 20 kann dem Computersystem 20 aus Fig. 2 entsprechen. Das Computersystem 20 ist dafür ausgelegt, das Verfahren 10 gemäß Fig. 1 und das Verfahren 50 gemäß Fig. 5 auszuführen, insbesondere ist das Computersystem 20 aus Fig. 3 dafür ausgelegt das Trainings-Verfahren 50 gemäß Fig. 5 auszuführen. Das Computersystem 20 kann in Hard- und/oder Software realisiert sein. Entsprechend kann das in Fig. 4 gezeigte System als Computerprogramm angesehen werden, das dazu ausgelegt ist, das Verfahren 10 gemäß Fig. 1 und das Verfahren 50 gemäß Fig. 5 auszuführen. Die im Folgenden nicht thematisierten Blöcke des Systems 20 entsprechen den entsprechenden Blöcken aus Fig. 2 und haben entsprechende Funktionalitäten.

In Fig. 4 wird ein Fehlerbehandlungsmechanismus des Computersystems 20 dargestellt. Falls kein Programmcode 31 ohne Fehler generiert werden kann, führt das in dem dynamischen De-Obfuskator 28 und/oder der statischen Komplexitätsprüfung 29 zu einem Fehler.

Entsprechend wird eine Meldung 34 zur Reduzierung des Vertrauens in die Obfuskation ausgegeben. Zudem wird in einem Fehlermodul 35 der Fehler sowie der zugehörige Programmcode 31 hinterlegt. Dazu ist das Fehlermodul 35 mit dem dynamischen De-Obfuskator 28 und der statischen Komplexitätsprüfung 29 verbunden. Derartige Fehler können aus den Metriken abgeleitet werden oder sie entsprechen den Metriken.

Aus dem Fehlermodul 35 wird als Information 36 der bisher beste Programmcode mit den noch existierenden Fehlern und/oder den Metriken zu dem Sprachmodell 22 zurückgeführt, um damit einen besseren im Idealfall fehlerfreien Ziel-Programmcode zu generieren. Diese weitere Iteration vermindert die Zuverlässigkeit und wird in der Qualitätsbestimmung berücksichtigt.

Optional kann sich dies nicht nur auf Fehler im Überprüfungsbereich beziehen, sondern analog auch auf Fehler im Qualitätsbewertungsbereich.

Fig. 5 ist ein Flussdiagramm, das ein Verfahren 50 zum Trainieren eines Sprachmodells illustriert. Das Sprachmodells ist eingerichtet zur automatisierten Obfuskation von Programmcode.

Zusammengefasst wird der durch das Sprachmodell erzeugte Code als Feedback an das Sprachmodell zurückgegeben, um eine neue Generation von Quellcode zu generieren. Die Idee ist, dass bereits passender (oder besserer) Code dann mit einer aktualisierten Eingabeaufforderung, die den neuen Code enthält, im Hinblick auf die Code-Verschleierung feinabgestimmt werden kann. Wenn beispielsweise bereits guter Code nur an bestimmten Stellen Laufzeitprobleme aufweist, können diese Stellen in das Sprachmodell zurückgeführt werden.

In einem ersten Schritt des Verfahrens erfolgt ein Erzeugen 51 des Ursprung-Programmcodes oder eines Source Codes. Dies kann manuell oder durch ein Sprachmodell geschehen. Das Sprachmodell kann bereits vortrainiert und gegebenenfalls auch schon fein abgestimmt sein. Alternativ kann auch mit einem neuen, untrainierten Sprachmodell gestartet werden. Das Trainieren basiert hier auf Reinforcement Learning. Das Trainieren geschieht in einer Trainingsumgebung zum Beispiel mit PPO (Proximal Policy Optimization).

Weiter erfolgt ein Obfuskieren 52 des Programmcodes mittels des Verfahrens 10 wie zuvor anhand von Fig. 1 beschrieben. Das Obfuskieren wird durch ein Sprachmodellvorgenommen. Das Sprachmodell kann bereits vortrainiert und gegebenenfalls auch schon fein abgestimmt sein. Alternativ kann auch mit einem neuen, untrainierten Sprachmodell gestartet werden. Das Trainieren basiert hier auf Reinforcement Learning. Das Trainieren geschieht in einer Trainingsumgebung zum Beispiel mit PPO (Proximal Policy Optimization).

Dann erfolgt ein Erzeugen 53 einer Belohnung für das Sprachmodell, wobei die Belohnung anhand der (gespeicherten) Metriken des dynamischen De-Obfuskierens und/oder der (gespeicherten) Metriken der Codekomplexität erzeugt wird. So kann eine niedrige Bewertung erfolgen, wenn das De-Obfuskieren nur kurz andauert und/oder wenn die Metriken der Codekomplexität niedrig sind. Niedrige Metriken der Codekomplexität deuten auf eine eher einfache und damit leichter zu umgehende Obfuskation hin. Entsprechend kann eine hohe Bewertung erfolgen, wenn das De-Obfuskieren lang andauert oder scheitert und/oder wenn die Metriken der Codekomplexität hoch sind. Hohe Metriken der Codekomplexität deuten auf eine eher komplexe und damit schwerer zu umgehende Obfuskation hin.

Schließlich erfolgt ein Aktualisieren 54 von Gewichten des Sprachmodells mit dem Wert der Belohnung. Das Resultat des Verfahrens ist ein Sprachmodell, das auf neuen ungelabelten Daten (hier zum Beispiel C-Code aus einer Motorsteuerung) besser trainiert ist, d.h. zuverlässigere Obfuskationen liefert.

Gemäß einer Ausführungsform umfasst das Verfahren weiterhin, dass die Belohnung approximiert wird durch Ausführung nur eines Tests der Tests des automatisierten Prüfens. Dies erlaubt eine Beschleunigung des Trainings.

## Patentansprüche

1. Verfahren (10) zur Obfuskation von Programmcode (23) mittels eines Sprachmodells (22) mit den Schritten:
- Obfuskieren (11) eines Programmcodes (23) mittels eines Sprachmodells (22),
- Erzeugen (12) einer ausführbaren Datei (43) aus dem obfuskierten Programmcode (23),
- dynamisches De-Obfuskieren (13) der ausführbaren Datei (43) bis das De-Obfuskieren (13) abgeschlossen ist oder zu keinen neuen Ergebnissen führt,
- Speichern (14) von Metriken des dynamischen De-Obfuskierens (13),
- Rückführen (15) von Metriken des dynamischen De-Obfuskierens (13) und optional des generierten Programmcodes (23) an das Sprachmodell (22) für eine weitere Iteration des Obfuskierens (11).

2. Verfahren (10) gemäß Anspruch 1, mit den weiteren Schritten:
- Durchführen einer statischen Komplexitätsprüfung (29) des obfuskierten Programmcodes (23) bis das Durchführen (15) abgeschlossen ist oder zu keinen neuen Ergebnissen führt,
- Speichern von Metriken der Codekomplexität,
- Rückführen von Metriken der Codekomplexität und optional des generierten Programmcodes (23) an das Sprachmodell (22) für eine weitere Iteration des Obfuskierens (11).

3. Verfahren (10) gemäß Anspruch 1 oder 2, wobei die Metriken des dynamischen De-Obfuskierens (12) und des generierten Programmcodes (23) gespeichert werden.

4. Verfahren (10) gemäß einem der Ansprüche 1 bis 3, wobei nach dem dynamischen De-Obfuskieren (12) und dem Durchführen (14) einer statischen Komplexitätsprüfung (14) der Programmcode (23) anhand von Metriken (32) auf seine Güte bewertet wird, wobei die Metriken (32) Code-Qualitätsmetriken, Test-Qualitätsmetriken und/oder die Anzahl von Tests umfassen.

5. Verfahren (10) gemäß einem der Ansprüche 1 bis 4, wobei Metriken des dynamischen De-Obfuskierens (12) De-Obfuskationslaufzeit, Code-Spuren, Programmausgaben und/oder Programmverhalten wie zum Beispiel die Laufzeit umfassen.

6. Verfahren (10) gemäß einem der Ansprüche 1 bis 5, wobei Metriken der Codekomplexität zyklomatische Komplexität, Anzahl der Zeilen des Quellcodes, Anzahl der Zeilen des ausführbaren Codes, Kopplung und/oder Tiefe der Vererbung, Wartbarkeitsindex, kognitive Komplexität, Halstead Metriken wie zum Beispiel dem Halstead Volumen und/oder Nacharbeitsquote umfassen.

7. Verfahren (10) gemäß einem der Ansprüche 1 bis 6, wobei das Obfuskieren (11) ein Sicherheitsmerkmal in den Programmcode (23) einfügt.

8. Verfahren (10) gemäß einem der Ansprüche 1 bis 7, wobei die gespeicherten Metriken des dynamischen De-Obfuskierens (12) und/oder die gespeicherten Metriken der Codekomplexität unterschiedlich obfuskierter Programmcodes (23) verglichen werden, um den am besten obfuskierten Programmcode (23) zu bestimmen.

9. Verfahren (10) gemäß einem der Ansprüche 1 bis 8, wobei das dynamische De-Obfuskieren (13) der ausführbaren Datei (43) und das Durchführen (15) einer statischen Komplexitätsprüfung (29) des Programmcodes (23) parallel ausgeführt werden.

10. Verfahren (50) zum Trainieren eines Sprachmodells (22) eingerichtet zur Obfuskation von Programmcode (23), mit den Schritten:
- Erzeugen (51) eines Programmcodes (23),
- Obfuskieren (52) des Programmcodes (23) mit dem Verfahren (10) gemäß einem der Ansprüche 1 bis 9,
- Erzeugen (53) einer Belohnung für das Sprachmodell (22), wobei die Belohnung anhand der gespeicherten Metriken des dynamischen De-Obfuskierens (12) und/oder der gespeicherten Metriken der Codekomplexität erzeugt wird,
- Aktualisieren (54) von Gewichten des Sprachmodells mit dem Wert der Belohnung.

11. Verfahren (50) gemäß Anspruch 10, wobei die Belohnung approximiert wird durch Ausführung nur einer Verifizierung.

12. Computersystem (20), dafür ausgelegt, das Verfahren (10; 50) gemäß einem der Ansprüche 1 bis 11 auszuführen.

13. Computerprogramm, das dazu ausgelegt ist, das Verfahren (10; 50) gemäß einem der Ansprüche 1 bis 11 auszuführen.

14. Computerlesbares Medium oder Signal, das das Computerprogramm gemäß Anspruch 13 speichert und/oder enthält.
